## Europäisches Patentamt
## European Patent Office
## Office européen des brevets

(19)

(11) Veröffentlichungsnummer: **0 000 728**
**B1**

(12) **EUROPÄISCHE PATENTSCHRIFT**

(45) Veröffentlichungstag der Patentschrift:
29.04.81

(51) Int. Cl.³: **B 29 F 3/04**, B 29 F 3/03

(21) Anmeldenummer: 78100499.9

(22) Anmeldetag: 26.07.78

(54) Verfahren und Vorrichtung zum Entfernen von flüchtigen Anteilen, die bei der Extrusion von Kunststoffschmelzen aus diesen entweichen.

(30) Priorität: 03.08.77 DE 2734946

(43) Veröffentlichungstag der Anmeldung:
21.02.79 Patentblatt 79/4

(45) Bekanntmachung des Hinweises auf die Patenterteilung:
29.04.81 Patentblatt 81/17

(84) Benannte Vertragsstaaten:
BE CH DE FR GB NL

(56) Entgegenhaltungen:
FR-A-1 038 355
US-A-3 110 547
US-A-3 933 958

(73) Patentinhaber: BASF Aktiengesellschaft,
Carl-Bosch-Strasse 38, D-6700 Ludwigshafen (DE)

(72) Erfinder: Hoerauf, Werner, Dr., Homburger Strasse 10,
D-6700 Ludwigshafen (DE)
Erfinder: Valentin, Guenter,, Pfarrer-Friedrich-Strasse 30,
D-6700 Ludwigshafen (DE)
Erfinder: Kegel, Robert, Kalmitstrasse 15,
D-6710 Frankenthal (DE)
Erfinder: Kuhn, Helmut, Philipp-Kranz-Strasse 3,
D-6718 Gruenstadt (DE)

## Verfahren und Vorrichtung zum Entfernen von flüchtigen Anteilen, die bei der Extrusion von Kunststoffschmelzen aus diesen entweichen

Bei der Extrusion von Kunststoffschmelzen entweichen aus diesen nach Austritt aus der Formgebungsöffnung flüchtige Anteile, die entfernt werden müssen. Solche flüchtigen Anteile sind zum Teil überlriechend und reizen die Atemwege oder sind auf die Dauer schädlich. Beispielsweise treten bei der Extrusion von Polycaprolactam Caprolactamdämpfe auf, die entfernt werden müssen, da Caprolactam einen MAK-Wert von 25 mg/m$^3$ (maximale Arbeitsplatzkonzentration) hat. Solche flüchtigen Anteile, die aus Monomeren und Oligomeren oder Abbauprodukten von Polymeren bestehen und bei Raumtemperatur fest oder flüssig sind, scheiden sich beim Absaugen häufig in den dafür vorgesehenen Leitungen und Vorrichtungen ab. Hierdurch treten Störungen auf, deren Beseitigung erheblich Arbeitszeit und Aufwand in Anspruch nimmt. Bislang wurden solche flüchtigen Anteile durch getrennte Absaugvorrichtungen entfernt, um eine Verschmutzung der Luft im Arbeitsraum zu vermeiden. Solche separaten Vorrichtungen zum Absaugen von flüchtigen Anteilen haben jedoch den Nachteil, daß sie leicht zu Verstopfungen neigen und darüber hinaus den Zugang zu der Düsenöffnung versperren und somit die Handhabung des extrudierten Stranges erheblich beeinträchtigen.

Entsprechend der FR-A-1 038 355, Figur in Verbindung mit dem Beispiel, wird eine 10 Gew.-% Monomeren enthaltende Caprolactamschmelze durch eine Düsenplatte 1 in feiner Verteilung durch einen beheizten geschlossenen Raum 2 unter Beibehaltung des schmelzflüssigen Zustandes geleitet und die Schmelze als Sumpf 4 gesammelt. Da es sich um einen geschlossenen Raum handelt, können sich die Monomeren nicht frei ausbreiten, sondern allenfalls durch die Öffnung 8 entweichen. Die Absaugöffnung 8 befindet sich nicht in unmittelbarer Nähe der Düsenöffnung sondern im Verlauf des Behandlungsraumes nach unten. Ausweislich des Beispieles wird der Behandlungsraum fortlaufend evakuiert und unter einem Druck von 7 mm gehalten. Es versteht sich, daß der gesamte Raum 2 von Caprolactamdampf entsprechend dem Partialdruck erfüllt ist. Diese Caprolactamdämpfe werden durch die Öffnung 8 abgesaugt und durch eine separate elektrische Widerstandsheizung auf einer Temperatur oberhalb des Schmelzpunktes gehalten. Es handelt sich somit um ein Entlactamisierungsverfahren, das mit einer Extrusion unter Formgebung nicht vergleichbar ist. Das erfindungsgemäße Verfahren setzt dort ein, wo die Schmelze 4 aus der nicht näher bezeichneten Öffnung nach unten in die Atmosphäre ausgetragen wird.

Desgleichen wird entsprechend der US-A-3 110 547 ausweislich Figur und Beispiele eine Polyesterschmelze durch Düsenöffnungen in einen geschlossenen Behälter 8 geleitet und unter Aufrechterhaltung des schmelzflüssigen Zustandes als Sumpf unten gesammelt.

Auch hier können die Glykoldämpfe nicht in die Atmosphäre entweichen. Vielmehr werden die Glykoldämpfe mittels vorher erhitztem Stickstoff abgeführt. Hierbei dürfte es unerheblich sein, wie bei allen Entgasungsverfahren, ob dies durch Öffnungen 12 oder wie in der FR-A-1 038 355 durch die Öffnung 8 geschieht.

Der Erfindung liegt die Aufgabe zugrunde, die Absaugung von flüchtigen Anteilen beim Extrudieren von Kunststoffschmelzen in die Atmosphäre unter Formgebung so zu gestalten, daß keine störungsanfälligen aufwendigen zusätzlichen Absaugevorrichtungen notwendig sind und zugleich der Zugang zu dem extrudierten Formteil nicht durch zusätzliche Vorrichtungen versperrt wird.

Diese Aufgabe wird bei einem Verfahren zum Entfernen von flüchtigen Anteilen, die bei der Extrusion von Kunststoffschmelzen aus diesen in die umgebende Luft entweichen, wobei diese flüchtigen Anteile mit der umgebenden Luft abgesaugt werden, dadurch gelöst, daß man die flüchtigen Anteile sofort beim Austritt aus der Kunststoffschmelze durch mindestens eine Absaugöffnung (5), die sich in unmittelbarer Nähe der Düsenöffnung (4), aus der die Kunststoffschmelze austritt, befindet, absaugt und die solche flüchtigen Anteile enthaltende Luft unmittelbar nach Eintritt in die Absaugöffnung (5) mit dem Heizmedium für die Kunststoffschmelze erhitzt.

Ferner ist ein Gegenstand der Erfindung eine Vorrichtung zur Durchführung des Verfahrens, gekennzeichnet durch einen konischen Zulauf 1 für die Kunststoffschmelze mit einem Heizmantel 2, einer an der Spitze des Konus angebrachten Düsenplatte 3 mit mindestens einer Düsenöffnung 4 für den Austritt der Kunststoffschmelze und mindestens einer in unmittelbarer Nähe der Düsenöffnung 4 angeordneten Absaugöffnung 5, die in Richtung des Austrags der Kunststoffschmelze zu der Düsenöffnung 4 hin geneigt ist, wobei eine Ummantelung 6 zusammen mit der Düsenplatte 3 und dem Heizmantel 2 einen beheizten Hohlraum 7 bildet, der einen Auslaß 8 aufweist.

Das neue Verfahren und die neue Vorrichtung haben den Vorteil, daß keine Verstopfungen in den Absaugleitungen eintreten und die schädlichen Dämpfe wirksam aus dem Arbeitsraum entfernt werden. Ferner besteht der Vorteil, daß die abgesaugte Luft durch die Heizmedien für Düsenplatte und Kunststoffschmelze unmittelbar nach dem Ansaugen ohne weitere Hilfsmittel auf die erforderliche Temperatur erhitzt wird.

Es war keineswegs abzusehen, daß ein Absaugen von flüchtigen Anteilen aus einem nicht geschlossenen Raum durch Öffnungen, die in unmittelbarer Nähe der formgebenden Düsenöffnung für die Kunststoffschmelze angebracht sind, wirkungsvoll möglich ist. Die extrudierte Kunststoffschmelze bewegt sich nämlich von der Ansaugöffnung weg und somit auch die aus der Kunststoffschmelze austretenden flüchtigen Anteile. Es war vielmehr angezeigt, die Absaugöffnung im Verlauf des sich von der Düsenöffnung wegbewegenden Kunststoffstranges anzuordnen. Für die Erhitzung wird die angesaugte Luft im Gegenstrom zur Kunststoffschmelze geführt und das ohnehin vorhandene Heizmedium für die Kunststoffschmelze zweiseitig ausgenützt, nämlich einmal um die Kunststoffschmelze im flüssigen Zustand zu erhalten und andererseits die abgesaugte Luft zu erhitzen. Es ist bemerkenswert, daß dies keiner besonderen Regelung bedarf, da die Kunststoffschmelze zwangsläufig über dem Schmelzpunkt des zu extrudierenden Kunststoffes gehalten wird. Es war auch keineswegs vorherzusehen, welche Absaugerichtung eingehalten werden muß um aus einem nicht begrenzten Raum flüchtige Anteile die sich von der Absaugöffnung wegbewegen, wirkungsvoll anzusaugen.

Das erfindungsgemäße Verfahren ist geeignet zum Entfernen von flüchtigen Anteilen, die bei der Extrusion aus Kunststoffschmelzen entweichen. In der Regel handelt es sich hierbei um thermoplastische, organische Polymere, beispielsweise Polystyrol, dessen Copolymerisate, z. B. mit Acrylnitril oder kautschukmodifizierte Polystyrole, ferner Polyvinylchlorid, kautschukmodifiziertes Polyvinylchlorid, Polyolefine wie Polyäthylen oder Polypropylen, Polyoxymethylen sowie Polyamide wie Polyamid-66 oder Polyamid-6.

Solche Polymere werden aus der Schmelze, z. B. bei Temperaturen von 180 bis 300°C, geformt. Die hierbei aus der Schmelze austretenden flüchtigen Anteile sind ihrer Art und Zusammensetzung nach nur zum Teil bekannt. Solche flüchtigen Anteile enthalten Monomere, ferner Oligomere, die von der Polymerisation herrühren oder Oligomere, die durch Abbau durch die thermische Behandlung entstehen, ferner Zersetzungsprodukte. Besonders vorteilhaft wendet man das Verfahren dann an, wenn die flüchtigen Anteile bei Raumtemperatur flüssig oder fest sind. Besondere technische Bedeutung hat das Verfahren nach der Erfindung erlangt bei der Extrusion von Polycaprolactam. Hierbei werden die bei der Extrusion entstehenden Caprolactamdämpfe entfernt.

Unter Extrusion ist das Austragen einer Kunststoffschmelze bei deren Herstellung zu versehen, aber auch die Formgebung einer Kunststoffschmelze bei deren Weiterverarbeitung, z. B. zu Endlosprofilen wie Rohren.

Die flüchtigen Anteile werden mit der umgebenden Luft abgesaugt, und zwar so, daß die flüchtigen Anteile unmittelbar beim Austritt aus der Kunststoffschmelze abgesaugt werden. Ein wesentliches Merkmal ist es, daß die solche flüchtigen Anteile enthaltene Luft unmittelbar nach dem Eintritt in die Absaugöffnung erhitzt wird. Die Temperaturen richten sich nach der Art der flüchtigen Anteile. In der Regel ist davon auszugehen, daß man die abgesaugte Luft auf eine Temperatur erhitzt, die mindestens 20°C, vorteilhaft 30°C, über dem Schmelzpunkt der abgesaugten flüchtigen Anteile liegt. Beim Absaugen von Caprolactamdämpfen erhitzt man die abgesaugte Luft z. B. auf mindestens 90°C, um ein Abscheiden von festem Caprolactam zu vermeiden. Für andere flüchtige Anteile lassen sich die günstigsten Temperaturen durch einfache Versuche unschwer ermitteln. Die obere Temperaturgrenze wird durch wirtschaftliche Erwägungen bestimmt, da ein überflüssiges Erhitzen unnötige Energie verbraucht. Als obere Temperaturgrenze ist in der Regel eine Temperatur von 200°C anzusehen. Dieser Wert stellt jedoch im Hinblick auf die Vielfalt von möglichen flüchtigen Anteilen keine Begrenzung dar. Die flüchtige Anteile enthaltende abgesaugte Luft wird mit dem Heizmedium für die Kunststoffschmelze, z. B. der elektrischen Heizung oder Flüssigkeitsheizung, die für Temperierung der Kunststoffschmelze verwendet wird, erhitzt.

Beim Absaugen von wasserlöslichen Dämpfen, wie Caprolactamdämpfen, hat es sich als vorteilhaft erwiesen, den Unterdruck zum Ansaugen mittels Wasserinjektoren zu erzeugen. Hierbei werden aus der abgesaugten Luft die flüchtigen Anteile wie Caprolactam ausgewaschen und im Wasser, das im Kreis geführt wird, angereichert. Auf diese Weise wird das abgesaugte Caprolactam als z. B. 20gewichtsprozentige Lösung erhalten, aus der Caprolactam wieder gewonnen wird.

Die Absaugöffnung befindet sich in unmittelbarer Nähe, z. B. im Abstand von 3 bis 10 cm, von der Düsenöffnung, aus der die Kunststoffschmelze austritt, um zu gewährleisten, daß die flüchtigen Anteile unmittelbar beim Austritt aus der Kunststoffschmelze entfernt werden. Hierbei hat es sich bewährt, wenn die Richtung der Absaugöffnung nicht parallel zu der austretenden Kunststoffschmelze verläuft, sondern zu der Achse der austretenden Kunststoffschmelze eine Neigung, z. B. in einem Winkel von 25 bis 60°, aufweist, so daß die flüchtigen Anteile von der Kunststoffschmelze weggesaugt werden.

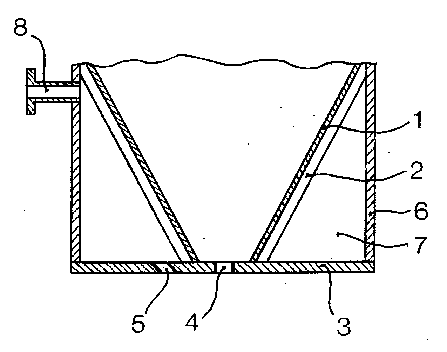

In der Figur wird der Querschnitt einer für die Durchführung des Verfahrens geeigneten Vorrichtung gezeigt. Die Figur zeigt den Austragsteil einer beliebigen nicht weiter ausgeführten Vorrichtung, die Kunststoffschmelze enthält. Der Austragsteil besteht aus einem konischen Zulauf 1 für die Kunststoffschmelze. Der Konus muß nicht spitz zulaufen, sondern kann auch beliebig andere Ausgangsformen haben, wie ovale oder rechteckige Formen. Der konische Zulauf 1 ist mit einem Heizmantel 2 umgeben. Es handelt sich hierbei um elektrische Induktionsheizungen oder Dampf- oder Flüssigkeitsheizungen. Am unteren Ende des konischen Zulaufs ist eine Düsenplatte 3 angebracht. Diese Düsenplatte weist mindestens eine Austrittsöffnung für die Kunststoffschmelze 4 auf. Die Form und die Zahl der Austrittsöffnungen richten sich nach der Aufgabenstellung bei der Extrusion von Kunststoffschmelzen. Wenn es sich darum handelt, Kunststoffe zu granulieren, wird man zweckmäßig eine Reihe von Lochdüsenöffnungen vorsehen, um granulierbare Stränge zu erhalten. Falls beabsichtigt ist, Endlosprofile herzustellen, sind diese Öffnungen nach den aus dem Stand der Technik bekannten Düsen ausgestattet. Die Düsenplatte 3 weist zusätzlich mindestens eine Absaugöffnung 5 auf. Durch diese Absaugöffnung werden die flüchtigen Anteile, die beim Austritt der Kunststoffschmelze aus der Düsenöffnung 4 entweichen, sofort abgesaugt. Die Absaugöffnung 5 ist möglichst nahe an der Düsenöffnung 4 angeordnet und in Richtung des Kunststoffaustrags zu der Düsenöffnung 4 hin geneigt. Die Ummantelung 6, die einen Auslaß 8 aufweist, bildet zusammen mit dem Heizmantel 2 und der Düsenplatte 3 einen beheizten Hohlraum 7. Beim Eintritt der abgesaugten Luft durch die Düsenöffnung 5 in den Hohlraum 7 wird die angesaugte Luft durch den Heizmantel 2 aufgeheizt und verläßt den Hohlraum über den Auslaß 8 zu einer Absaugvorrichtung, die nicht gezeigt ist. Es ist auch möglich, daß Absaugöffnungen 5 an beiden Seiten der Düsenöffnung 4 angebracht sind. Die Absaugöffnung 5 kann in Form von mehreren Düsenöffnungen oder Schlitzen oder ringförmigen Schlitzen, die der Düsenöffnung 4 angepaßt sind, angeordnet sein.

## Patentansprüche

1. Verfahren zum Entfernen von flüchtigen Anteilen, die bei der Extrusion von Kunststoffschmelzen aus diesen in die umgebende Luft entweichen, wobei diese flüchtigen Anteile mit der umgebenden Luft abgesaugt werden, dadurch gekennzeichnet, daß man die flüchtigen Anteile sofort beim Austritt aus der Kunststoffschmelze durch mindestens eine Absaugöffnung (5), die sich in unmittelbarer Nähe der Düsenöffnung (4), aus der die Kunststoffschmelze austritt, befindet, absaugt und die solche flüchtigen Anteile enthaltende Luft unmittelbar nach Eintritt in die Absaugeöffnung (5) mit dem Heizmedium für die Kunststoffschmelze erhitzt.

2. Verfahren nach Anspruch 1, dadurch gekennzeichnet, daß man die abgesaugte Luft auf eine Temperatur erhitzt, die mindestens 20°C über dem Schmelzpunkt der flüchtigen Anteile liegt.

3. Verfahren nach den Ansprüchen 1 und 2, dadurch gekennzeichnet, daß die Absaugerichtung eine Neigung zu der aus dieser Düsenöffnung (4) austretenden Kunststoffschmelze aufweist.

4. Verfahren nach den Ansprüchen 1 bis 3, dadurch gekennzeichnet, daß man Caprolactamdämpfe, die bei der Extrusion von Polycaprolactam entstehen, entfernt.

5. Vorrichtung zur Durchführung des Verfahrens nach einem der Ansprüche 1 bis 3, gekennzeichnet durch einen konischen Zulauf (1) für die Kunststoffschmelze mit einem Heizmantel (2), einer an der Spitze des Konus angebrachten Düsenplatte (3) mit mindestens einer Düsenöffnung (4) für den Austritt der Kunststoffschmelze und mindestens einer in unmittelbarer Nähe der Düsenöffnung (4) angeordneten Absaugöffnung (5), die in Richtung des Austrags der Kunststoffschmelze zu der Düsenöffnung (4) hin geneigt ist, wobei eine Ummantelung (6) zusammen mit der Düsenplatte (3) und dem Heizmantel (2) einen beheizten Hohlraum (7) bildet, der einen Auslaß (8) aufweist.

## Claims

1. A process for removing volatile constituents which escape from plastic melts into the surrounding air when such melts are extruded, these volatile constituents being drawn off together with the surrounding air, characterized in that the volatile constituents are drawn off immediately they are evolved by the plastic melt, through at least one suction orifice (5) which is located in the immediate vicinity of the die orifice (4) from which the plastic melt issues, and the air containing such volatile constituents is heated immediately after entering the suction orifice (5), by the heating medium for the plastic melt.

2. A process as claimed in claim 1, characterized in that the drawn-off air is heated to a temperature at least 20°C above the melting point of the volatile constituents.

3. A process as claimed in claims 1 and 2, characterized in that the suction direction is inclined towards the plastic melt issuing from the die orifice (4).

4. A process as claimed in claims 1 to 3, characterized in that caprolactam vapors formed during the extrusion of polycaprolactam are removed.

5. Apparatus for carrying out the process as claimed in any of claims 1 to 3, characterized by a conical inlet (1) for the plastic melt, with a heating jacket (2), a die plate (3), located at the tip of the cone, having at least one die orifice (4) from which the plastic melt issues, and at least one suction orifice (5) which is located in the immediate vicinity of the die orifice (4) and is inclined towards the die orifice (4) in the direction of the discharge of plastic melt, an outer casing (6) together with the die plate (3) and the heating jacket (2) forming a heated cavity (7) which possesses an outlet (8).

## Revendications

1. Procédé pour l'évacuation des produits volatils libérés pendant l'extrusion de masses fondues de matières plastiques dans l'air environnant, par aspiration avec l'air ambiant, caractérisé en ce que les produits volatils sont aspirés, dès qu'ils sortent de la masse fondue, à travers au moins un orifice d'aspiration (5) situé à proximité immédiate de la sortie de la filière d'extrusion (4) de la masse fondue et l'air contenant ces produits volatils est chauffé par le milieu de chauffage de la masse à extruder dès son passage à travers l'orifice d'extrusion (5).

2. Procédé suivant la revendication 1, caractérisé en ce que l'air aspiré est porté à une température de 20°C au moins supérieure au point de fusion des produits volatils.

3. Procédé suivant l'une des revendications 1 et 2, caractérisé en ce que l'air est aspiré suivant une direction inclinée par rapport à la direction d'extrusion de la masse fondue de matière plastique à travers la sortie de la filière (4).

4. Procédé suivant l'une des revendications 1 à 3, caractérisé en ce qu'il est appliqué à l'évacuation des vapeurs de caprolactame formées lors de l'extrusion d'une polycaprolactame.

5. Dispositif pour la rélisation du procédé suivant l'une des revendications 1 à 3, caractérisé en ce qu'il comprend un canal d'alimentation convergent (1) pour la masse fondue de matière plastique avec une chemise chauffante (2), une plaque de buse (3) disposée au sommet du cône d'alimentation (1) et comportant au moins une filière d'extrusion (4) de la masse fondue et, à proximité immédiate de la sortie de la filière (4), un orifice d'aspiration (5) incliné par rapport à la direction d'extrusion de la masse fondue en direction de la sortie de la filière (4), la plaque de buse (3) et la chemise chauffante (2) délimitant avex une enveloppe (6) une enceinte fermée (7) chauffée, pourvue d'un ajutage d'évacuation (8).